# EUROPÄISCHE PATENTSCHRIFT

(11) **EP 1 457 705 B1**
(45) Veröffentlichungstag und Bekanntmachung des Hinweises auf die Patenterteilung: **05.10.2005**
(21) Anmeldenummer: 03028908.6
(22) Anmeldetag: 17.12.2003
(51) Int. Cl.: F16F 13/10

(54) **Hydraulisch dämpfendes Gummilager**
Hydraulically-damped rubber mount
Support en caoutchouc à amortissement hydraulique

(30) Priorität: 10.03.2003 DE 10310737
(43) Veröffentlichungstag der Anmeldung: 15.09.2004
(73) Patentinhaber: Carl Freudenberg KG, 69469 Weinheim (DE)
(72) Erfinder: Ticks, Gerd-Heinz, 69483 Waldmichelbach (DE); Pfaff, Thomas, 16766 Kremmen-Beetz (DE); Gürtler, Thomas, 12057 Berlin (DE)

(56) Entgegenhaltungen:
- DE-A- 3 913 819
- US-A- 2 387 065
- US-A- 3 948 498
- US-A- 5 988 610
- PATENT ABSTRACTS OF JAPAN vol. 2000, no. 19, 5. Juni 2001 (2001-06-05) -& JP 2001 032876 A (HITACHI CONSTR MACH CO LTD), 6. Februar 2001 (2001-02-06)
- PATENT ABSTRACTS OF JAPAN vol. 2002, no. 04, 4. August 2002 (2002-08-04) -& JP 2001 336567 A (BRIDGESTONE CORP), 7. Dezember 2001 (2001-12-07)
- PATENT ABSTRACTS OF JAPAN vol. 1998, no. 03, 27. Februar 1998 (1998-02-27) -& JP 09 296844 A (KOMATSU LTD), 18. November 1997 (1997-11-18)

## Beschreibung

### Technisches Gebiet

Die Erfindung betrifft ein hydraulisch dämpfendes Gummilager.

Aus der JP 2001 336567 A ist ein hydraulisch dämpfendes Gummilager gemäß Oberbegriff von Anspruch 1 bekannt. Dieses vorbekannte hydraulisch dämpfende Gummilager umfasst ein im Wesentlichen rohrförmiges Gehäuse, das stirnseitig einerseits durch einen Deckel und stirnseitig andererseits durch einen Planscherkolben und einen ringförmigen Federkörper aus elastomerem Werkstoff jeweils dichtend verschlossen ist, wobei der Planscherkolben einen im Wesentlichen zylinderförmigen Schaft und einen im Wesentlichen tellerförmigen Kopf umfasst, wobei das Gehäuse den Schaft mit radialem Abstand umschließt, wobei in dem durch den Abstand gebildeten Spalt der Federkörper angeordnet ist und wobei der Kopf in Richtung der eingeleiteten Schwingungen beweglich in einem mit Dämpfungsflüssigkeit gefüllten Arbeitsraum angeordnet ist, der durch das Gehäuse, den Deckel, den Planscherkolben und den Federkörper begrenzt ist.

Ein hydraulisch dämpfendes Gummilager ist aus der EP 0 669 484 B1 bekannt. Das Gehäuse ist, im Längsschnitt betrachtet, topfförmig ausgebildet und hält durch zwei einander gegenüberliegenden Bördelungen einen Radialflansch eines im Wesentlichen trichterförmigen Versteifungsblechs. Der Axialflansch des Versteifungsblechs ist innerhalb des Federkörpers angeordnet und von diesem vollständig umschlossen. Innerhalb des topfförmigen Gehäuses ist ein mit Dämpfungsflüssigkeit gefüllter Arbeitsraum angeordnet, wobei der Kopf eines Planscherkolbens innerhalb des Arbeitsraums angeordnet und während des Betriebs von der Dämpfungsflüssigkeit umspült ist. Der Planscherkolben besteht aus einem separat erzeugten Schaft und einem separat erzeugten Kopf, die auf der dem Arbeitsraum zugewandten Stirnseite des Planscherkolbens miteinander verbunden sind.
Dabei ist allerdings zu beachten, dass das vorbekannte Gummilager eine Vielzahl von Einzelteilen umfasst, was in fertigungstechnischer und wirtschaftlicher Hinsicht wenig zufriedenstellend ist. Außerdem weist der Federkörper gebrauchsdauerveringernde Zugspannungen auf, und hinsichtlich der mechanischen Haltbarkeit ist die Zwei-Punkt-Bördelung bei Einleitung hoher Kräfte problematisch.

### Darstellung der Erfindung

Der Erfindung liegt die Aufgabe zugrunde, die zuvor genannten Nachteile zu vermeiden. Insbesondere liegt der Erfindung die Aufgabe zugrunde, ein Gummilager der eingangs genannten Art derart weiter zu entwickeln, dass dieses einen teilearmen Aufbau aufweist sowie einfach und kostengünstig herstellbar ist, dass das Gummilager eine gute Abdichtung der Dämpfungsflüssigkeit aufweist, dass gebrauchsdauerverringernde Zugspannungen innerhalb des Federkörpers vermieden werden und dass das Gummilager eine hohe mechanische Belastbarkeit während einer langen Gebrauchsdauer aufweist.

Diese Aufgabe wird erfindungsgemäß mit einem hydraulisch dämpfenden Gummilager gemäß Anspruch 1 gelöst. Auf vorteilhafte Ausgestaltungen nehmen die Unteransprüche Bezug.

Zur Lösung der Aufgabe ist ein hydraulisch dämpfendes Gummilager vorgesehen, umfassend ein im Wesentlichen rohrförmiges Gehäuse das stirnseitig einerseits durch einen Deckel und stirnseitig andererseits durch einen Planscherkolben und einen ringförmigen Federkörper aus elastomerem Werkstoff jeweils dichtend verschlossen ist, wobei der Planscherkolben einen im Wesentlichen zylinderförmigen Schaft und einen im Wesentlichen tellerförmigen Kopf umfasst, wobei das Gehäuse den Schaft mit radialem Abstand umschließt, wobei in dem durch den Abstand gebildeten Spalt der Federkörper angeordnet ist und wobei der Kopf in Richtung der eingeleiteten Schwingungen beweglich in einem mit Dämpfungsflüssigkeit gefüllten Arbeitsraum angeordnet ist, der durch das Gehäuse, den Deckel, den Planscherkolben und den Federkörper begrenzt ist, wobei der Schaft und der Kopf einstückig und materialeinheitlich ausgebildet sind und wobei eine ringförmige Innenhülse aus plastisch verformbarem Werkstoff, mittels derer der Federkörper mit dem Schaft verbunden ist und/oder der Federkörper einen Innendurchmesser aufweist, der herstellungsbedingt kleiner ist als der Außendurchmesser des Schafts, um den Federkörper in radialer Richtung vorzuspannen.

Ein solches Gummilager gelangt bevorzugt zur schwingungsdämpfenden/isolierenden Lagerung von Fahrerkabinen von Land- und Baumaschinen zur Anwendung.

Das erfindungsgemäße Gummilager weist einen teilearmen Aufbau auf und ist deshalb einfach und kostengünstig herstellbar. Dazu trägt insbesondere der einstückig und materialeinheitlich ausgebildete Planscherkolben bei. Auch das einteilige Gehäuse, das im Wesentlichen nur aus einem Rohrabschnitt besteht, begünstigt die einfache und kostengünstige Herstellung.

Ein weiteres wesentliches Merkmal des beanspruchten Gummilagers ist der Federkörper, der unter radialer Vorspannung innerhalb des Spalts angeordnet ist. Elastomere Werkstoffe reagieren generell empfindlich auf Zugspannungen, die beispielsweise dann auftreten, wenn die Federkörper im Anschluss an ihre Vulkanisation abkühlen. Die dabei entstehenden Schrumpfspannungen bewirken gebrauchsdauerverringernde Zugspannungen innerhalb des elastomeren Werkstoffs des Federkörpers. Um diesen Nachteil zu vermeiden, ist es erforderlich, den montierten Federkörper mit einer Druckvorspannung zu versehen. Diese Druckvorspannung kann beispielsweise dadurch aufgebracht werden, dass der ringförmige Federkörper in radialer Richtung kalibriert ist. Die Lebensdauer des Gummilagers wird dadurch wesentlich erhöht.

Der Federkörper und die Innenwand des Gehäuses können bevorzugt adhäsiv verbunden sein. Hierbei ist von Vorteil, dass sich eine flüssigkeitsdichte Verbindung zwischen dem Federkörper und der Innenwand des Gehäuses ergibt und es deshalb einer separaten Abdichtung in diesem Bereich nicht mehr bedarf. Eine adhäsive Verbindung kann beispielsweise durch Vulkanisation des Federkörpers mit dem Gehäuse erfolgen.

Gemäß einer Ausgestaltung ist es vorgesehen, dass der Federkörper mittels einer ringförmigen Innenhülse aus plastisch verformbarem Werkstoff mit dem Schaft verbunden ist. Vorteilhafterwase umschließt die Innenhülse den Schaft außenumfangsseitig unmittelbar anliegend, wobei der Federkörper und die Innenhülse ebenfalls bevorzugt adhäsiv verbunden sind.

Die Innenhülse, der Federkörper und das Gehäuse bilden eine vormontierbare Einheit. Dadurch ist die Montage einfach durchführbar.

Um den Federkörper in radialer Richtung vorzuspannen/ zu kalibrieren, weist die Innenhülse einen Innendurchmesser auf, der herstellungsbedingt kleiner ist als der Außendurchmesser des Schafts. Dadurch ist von Vorteil, dass die Kalibrierung des Federkörpers im Montageprozess des Gummilagers enthalten und kein separater Verfahrensschritt notwendig ist. Während der Montage des Gummilagers wird der zum Innendurchmesser der Hülse mit relativem Übermaß versehene Schaft in die Innenhülse eingepresst und weitet diese dadurch in radialer Richtung auf. Durch diese radiale Aufweitung der Innenhülse wird auch der elastomere Werkstoff des Federkörpers radial in Richtung des Gehäuses vorgespannt. Vulkanisationsbedingte Zugspannungen werden dadurch zumindest ausgeglichen oder in eine Druck-Vorspannung umgewandelt.

Zusätzlich oder alternativ kann der Federkörper einen Innendurchmesser aufweisen, der herstellungsbedingt kleiner ist als der Außendurchmesser des Schafts. Auch bei Entfall der zuvor beschriebenen Innenhülse besteht dadurch die Möglichkeit, eine radiale Vorspannung innerhalb des Federkörpers zu erzeugen. Dazu wird der Schaft während der Montage des Gummilagers unmittelbar in die zentrale Ausnehmung des ringförmigen Federkörpers eingepresst, wobei der Federkörper und der Schaft anschließend unter radialer Vorspannung ungebunden und dichtend aneinander befestigt sind.

Der Federkörper kann, im Längsschnitt betrachtet, im Wesentlichen H-förmig ausgebildet sein und in Richtung der eingeleiteten Schwingungen beiderseits jeweils zumindest einen Anschlagpuffer aufweisen. Die Anschlagpuffer sind vorgesehen um extreme Auslenkbewegungen des Planscherkolbens, bezogen auf das Gehäuse in Richtung der eingeleiteten Schwingungen zu begrenzen. Durch die Anschlagpuffer werden unerwünschte große mechanische Belastungen, beispielsweise Scherspannungen auf den Federkörper vermieden; auch bei extremen Belastungen des Gummilagers weist dieses gleichbleibend gute Gebrauchseigenschaften während einer langen Gebrauchsdauer auf.

Einer der Anschlagpuffer kann im Arbeitsraum angeordnet sein und zur Begrenzung extremer Auslenkbewegungen in Zugrichtung des Planscherkolbens mit dem Kopf in Berührung bringbar sein. Der andere Anschlagpuffer kann, ebenfalls zur Begrenzung extremer Auslenkbewegungen, in Druckrichtung des Planscherkolbens mit einer ortsfest mit dem Schaft verbundenen Anschlagplatte in Berührung bringbar sein. Die Anschlagpuffer sind dabei bevorzugt ohne Armierung/Stützkörper ausgebildet und bestehen aus einem kompakten elastomeren Block. Hierbei ist von Vorteil, dass auch sehr große Kräfte in Zug- oder Druckrichtung gepuffert werden, ohne dass beispielsweise eine Armierung/ein Stützkörper den Elastomerwerkstoff der Anschlagpuffer von innen nach außen beschädigt/zerstört.

Zumindest einer der Anschlagpuffer kann auf der seiner Anschlagfläche abgewandten Seite auf einem Stützvorsprung des Gehäuses abgestützt sein. Bevorzugt trifft dies auf beide Anschlagpuffer zu. Die Stützvorsprünge bilden dabei einen einstückigen Bestandteil des Gehäuses und sind beispielsweise in Form von Sicken umgeformt; bezogen auf das Gehäuse separat erzeugter Stützvorsprünge bedarf es daher nicht.

Der Federkörper kann zumindest eine erste Dichtung zur Abdichtung gegenüber dem Planscherkolben aufweisen. Eine solche Ausgestaltung ist dann von Vorteil, wenn die die zentrale Ausnehmung des Federkörpers begrenzende Wandung ungebunden mit dem radial innen angrenzenden Bauteil, beispielsweise der Innenhülse oder dem Schaft, verbunden ist. Auch dann, wenn die Innenhülse und der Federkörper adhäsiv verbunden sind und die Innenhülse auf den Schaft des Planscherkolbens aufgepresst ist, ist eine Abdichtung der Trennfuge zwischen der Innenhülse und dem Planscherkolben durch die erste Dichtung von Vorteil.

Der Federkörper kann zumindest eine zweite Dichtung zur Abdichtung gegenüber dem Gehäuse und/oder dem Deckel aufweisen. Der Deckel kann den Arbeitsraum stirnseitig einerseits begrenzen und ist mit dem Gehäuse beispielsweise durch eine Bördelung verbunden. Die Bördelung ist bevorzugt umfangsseitig in sich geschlossen ausgebildet. Dadurch wird eine besonders gute Haltbarkeit erreicht. Da der Deckel auf der dem Arbeitsraum zugewandten Seite unmittelbar mit Dämpfungsflüssigkeit beaufschlagt ist, ist eine Abdichtung zwischen dem Deckel und dem Gehäuse erforderlich um einen Austritt von Dämpfungsflüssigkeit in diesem Bereich zu vermeiden. Die zweite Dichtung ist zwischen dem Gehäuse und dem Deckel dichtend angeordnet.

Im Hinblick auf einen einfachen und teilearmen Aufbau ist von Vorteil, wenn der Federkörper die Anschlagpuffer, die erste Dichtung und die zweite Dichtung einstückig und materialeinheitlich ausgebildet sind. Das Gehäuse und der Federkörper und gegebenenfalls die Innenhülse bilden bevorzugt eine vormontierbare Einheit, wobei dann auch die Anschlagpuffer, die erste Dichtung und die zweite Dichtung einen Bestandteil der vormontierbaren Einheit bilden. Dadurch ist die Montage des Gummilagers insgesamt besonders einfach. Die Gefahr von Montagefehlem ist durch den einfachen und teilearmen Aufbau auf ein Minimum reduziert.

### Kurzbeschreibung der Zeichnung

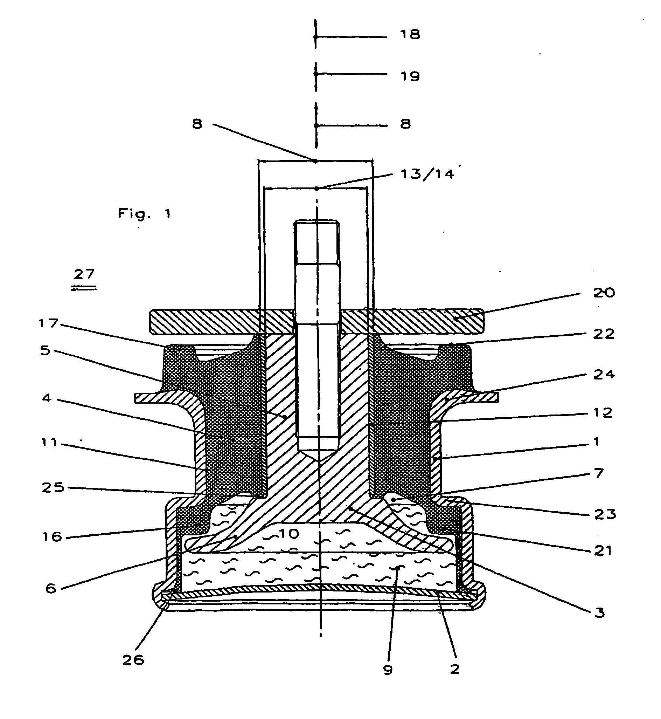

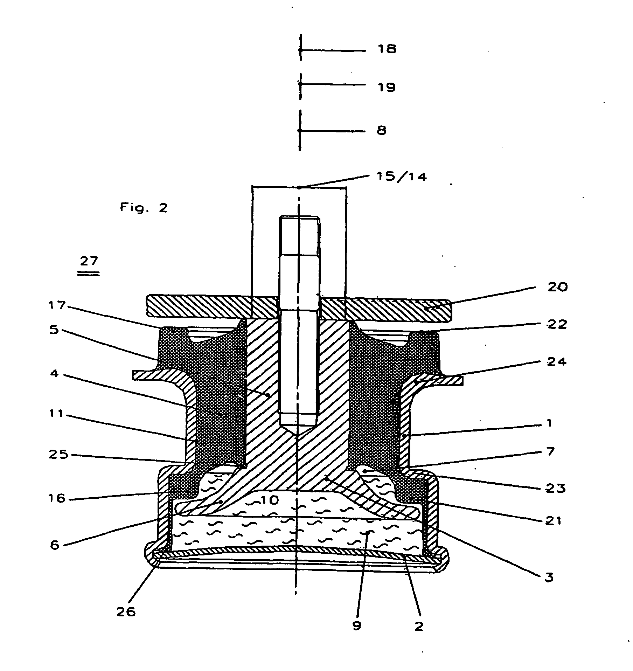

Zwei Ausführungsbeispiele des erfindungsgemäßen Gummilagers werden nachfolgend anhand der Figuren 1 und 2 näher erläutert. Diese zeigen jeweils in schematischer Darstellung:
Fig. 1 ein erstes, bevorzugtes Ausführungsbeispiel, bei dem der Federkörper radial innenseitig mittels einer Innenhülse mit dem Schaft verbunden ist.
Fig. 2 ein zweites Ausführungsbeispiel, bei dem der Federkörper den Schaft unmittelbar anliegend und dichtend umschließt.

In den Fig. 1 und 2 ist jeweils ein hydraulisch dämpfendes Gummilager im herstellungsbedingten, nicht-eingebauten Zustand, d.h., ohne statische Vorlast gezeigt.
Unter statischer Vorlast, wenn beispielsweise eine Fahrerkabine einer Land- oder Baumaschine auf der Anschlagplatte 20 gestützt ist, verlagert sich der Planscherkolben 3 in Druckrichtung 19, so dass der Kopf 6 in Richtung der eingeleiteten Schwingungen 8 im Wesentlichen mittig im Arbeitsraum 10 angeordnet ist.

In den hier gezeigten Ausführungsbeispielen bilden das Gehäuse 1, der Federkörper 4, die Anschlagpuffer 16, 17, die erste Dichtung 25 und die zweite Dichtung 26 eine vormontierbare Einheit. In Fig. 1 umfasst die vormontierbare Einheit außerdem die Innenhülse 12. Der Federkörper 4, die Anschlagpuffer 16, 17, die erste Dichtung 25 und die zweite Dichtung 26 sind jeweils einstückig und materialeinheitlich ausgebildet

Für gleichbleibend gute Gebrauchseigenschaften während einer langen Gebrauchsdauer ist von entscheidender Wichtigkeit, dass der Federkörper 4 unter radialer Vorspannung innerhalb des Spalts 7 angeordnet ist.

Das Gummilager umfasst ein rohrförmiges Gehäuse 1, das bevorzugt aus einem metallischen Werkstoff besteht. Stirnseitig einerseits ist das Gehäuse 1 durch den Deckel 2 und stirnseitig andererseits durch den Planscherkolben 3 und den ringförmigen Federkörper 4 aus elastomerem Werkstoff jeweils dichtend verschlossen. Der Planscherkolben 3 umfasst einen im Wesentlichen zylinderförmigen Schaft 5 und einen im Wesentlichen tellerförmigen Kopf 6, wobei der Planscherkolben 3 insgesamt einstückig und materialeinheitlich ausgebildet ist. Der Kopf 6 des Planscherkolbens 3 ist in Richtung 8 der eingeleiteten Schwingungen beweglich in dem mit Dämpfungsflüssigkeit 9 gefüllten Arbeitsraum 10 angeordnet, wobei die Dämpfung und Isolation von schwingenden Massen, beispielsweise einer Fahrerkabine von Land- oder Baumaschinen, dadurch bewirkt wird, dass der Kopf 6 des Planscherkolbens 3 in Richtung der eingeleiteten Schwingungen 8 hin- und herbewegt wird. Der Federkörper 4 ist als Blähfeder ausgebildet und baucht bei Hin- und Herbewegung des Planscherkolbens 3 relativ zum Gehäuse 1 und daraus resultierender Verlagerung der inkompressiblen Dämpfungsflüssigkeit 9 in Richtung der Umgebung 27 aus.

In jedem der beiden Ausführungsbeispiele ist die zweite Dichtung 26, die einen einstückigen Bestandteil des Federkörpers 4, der Anschlagpuffer 16, 17 und der ersten Dichtung 25 bildet, zwischen dem Gehäuse 1 und dem Deckel 2 angeordnet und dichtet diesen Bereich statisch ab. Auch die Ausgestaltung der Anschlagpuffer 16, 17 ist in beiden Ausführungsbeispielen gleich.
Der Federkörper 4 ist im Längsschnitt des Gummilagers betrachtet im Wesentlichen H-förmig ausgebildet und weist in Richtung 8 der eingeleiteten Schwingungen beiderseits jeweils einen in sich geschlossenen ringförmigen Anschlagpuffer 16, 17 auf. Der Anschlagpuffer 16 ist innerhalb des mit Dämpfungsflüssigkeit 9 gefüllten Arbeitsraums 10 angeordnet und ist bei extremen Auslenkbewegungen des Planscherkolbens 3, bezogen auf das Gehäuse 1, in Zugrichtung 18 mit dem Kopf 6 in Berührung bringbar. Der Anschlagpuffer 17 ist demgegenüber außerhalb des Arbeitsraums 10 in der Umgebung 27 angeordnet und bei extremen Auslenkbewegungen des Planscherkolbens 3, bezogen auf das Gehäuse 1, in Druckrichtung 19 mit der Anschlagplatte 20 in Berührung bringbar, wobei die Anschlagplatte 20 und der Schaft 5 einander ortsfest zugeordnet sind. Um unerwünscht hohe mechanische Belastungen der Anschlagpuffer 16,17 zu vermeiden, sind diese auf ihrer den jeweiligen Anschlagflächen 21, 22 abgewandten Seiten auf jeweils einem Stützvorsprung 23, 24 des Gehäuses 1 abgestützt. Innerhalb der Anschlagflächen 21, 22 angeordneter Armierungen und/oder Stützkörper aus zähhartem Werkstoff bedarf es daher nicht, was hinsichtlich eines langen, zerstörungsfreien Betriebs der Anschlagpuffer 16, 17 von hervorzuhebendem Vorteil ist.

In Fig. 1 ist ein erstes Ausführungsbeispiel des erfindungsgemäßen Gummilagers gezeigt.

Der Federkörper 4 ist mit dem Gehäuse und der Innenhülse 12 vulkanisiert, wobei die Innenhülse 12 herstellungsbedingt einen Innendurchmesser 13 aufweist, der kleiner ist als der Außendurchmesser 14 des Schafts 5. Während des Montagevorgangs des Gummilagers werden der Schaft 5 des Planscherkolbens 3 und die Innenhülse 12 miteinander verpresst. Dadurch weitet sich die Innenhülse in radialer Richtung auf; der Federkörper 4 wird dadurch während des Montagevorgangs kalibriert. Im Anschluss an die Montage des Gummilagers weist der Federkörper 4 eine Druck-Vorspannung auf, wodurch gleichbleibend gute Gebrauchseigenschaften während einer langen Gebrauchsdauer bedingt sind. Die erste Dichtung 25 dichtet die Trennfuge zwischen dem Innenumfang der Innenhülse 12 und dem Außenumfang des Schafts 5 ab.

In Fig. 2 ist ein zweites Ausführungsbeispiel gezeigt, dass sich vom Ausführungsbeispiel aus Fig. 1 dadurch unterscheidet, dass der Federkörper 4 den Schaft 5 ungebunden und unter elastischer Vorspannung anliegend umschließt. Der Innendurchmesser 15 des Federkörpers 4 ist herstellungsbedingt kleiner als der Außendurchmesser 14 des Schafts 5, so dass bei Montage des Gummilagers der Federkörper 4 durch den Schaft 5 radial nach außen gestaucht und dadurch eine radiale Vorspannung in den Federkörper 4 eingebracht wird.

In diesem Ausführungsbeispiel dichtet die zweite Dichtung 26 die Trennfuge zwischen dem Außenumfang des Schafts 5 und dem Innenumfang des Federkörpers 4 ab. Der Planscherkolben 3 kann in jedem der Ausführungsbeispiele aus einem polymeren Werkstoff bestehen. Hierbei ist von Vorteil, dass auch vergleichsweise komplizierte Formen einfach und kostengünstig herstellbar sind. Das Gehäuse 1 besteht bevorzugt aus einem metallischen Werkstoff, der spanlos umformbar ist.

## Patentansprüche

1. Hydraulisch dämpfendes Gummilager, umfassend ein im Wesentlichen rohrförmiges Gehäuse (1), das stirnseitig einerseits durch einen Deckel (2) und stirnseitig andererseits durch einen Planscherkolben (3) und einen ringförmigen Federkörper (4) aus elastomerem Werkstoff jeweils dichtend verschlossen ist, wobei der Planscherkolben (3) einen im Wesentlichen zylinderförmigen Schaft (5) und einen im Wesentlichen tellerförmigen Kopf (6) umfasst, wobei das Gehäuse (1) den Schaft (5) mit radialem Abstand umschließt, wobei in dem durch den Abstand gebildeten Spalt (7) der Federkörper (4) angeordnet ist und wobei der Kopf (6) in Richtung (8) der eingeleiteten Schwingungen beweglich in einem mit Dämpfungsflüssigkeit (9) gefüllten Arbeitsraum (10) angeordnet ist, der durch das Gehäuse (1), den Deckel (2), den Planscherkolben (3) und den Federkörper (4) begrenzt ist, **dadurch gekennzeichnet, dass** der Schaft (5) und der Kopf (6) einstückig und materialeinheitlich ausgebildet sind und dass eine ringförmige Innenhülse (12) aus plastisch verformbarem Werkstoff, mittels derer der Federkörper (4) mit dem Schaft (5) verbunden ist und/oder der Federkörper (4) einen Innendurchmesser (13, 15) aufweist, der herstellungsbedingt kleiner ist als der Außendurchmesser (14) des Schafts (5), um den Federkörper (4) in radialer Richtung vorzuspannen.

2. Gummilager nach Anspruch 1, **dadurch gekennzeichnet, dass** der Federkörper (4) und die Innenwand (11) des Gehäuses (1) adhäsiv verbunden sind.

3. Gummilager nach einem der Ansprüche 1 oder 2, **dadurch gekennzeichnet, dass** die Innenhülse (12) den Schaft (5) außenumfangsseitig unmittelbar anliegend umschließt.

4. Gummilager nach einem der Ansprüche 1 bis 3, **dadurch gekennzeichnet, dass** der Federkörper (4) und die Innenhülse (12) adhäsiv verbunden sind.

5. Gummilager nach einem der Ansprüche 1 bis 4, **dadurch gekennzeichnet, dass** der Federkörper (4), im Längsschnitt betrachtet, im Wesentlichen H-förmig ausgebildet ist und in Richtung (8) der eingeleiteten Schwingungen beiderseits jeweils zumindest einen Anschlagpuffer (16, 17) aufweist.

6. Gummilager nach Anspruch 5, **dadurch gekennzeichnet, dass** einer der Anschlagpuffer (16) im Arbeitsraum (10) angeordnet und zur Begrenzung extremer Auslenkbewegungen in Zugrichtung (18) des Planscherkolbens (3) mit dem Kopf (6) in Berührung bringbar ist.

7. Gummilager nach einem der Ansprüche 5 oder 6, **dadurch gekennzeichnet, dass** einer der Anschlagpuffer (17) zur Begrenzung extremer Auslenkbewegungen in Druckrichtung (19) des Planscherkolbens (3) mit einer ortsfest mit dem Schaft (5) verbundenen Anschlagplatte (20) in Berührung bringbar ist.

8. Gummilager nach einem der Ansprüche 5 bis 7, **dadurch gekennzeichnet, dass** zumindest einer der Anschlagpuffer (16, 17) auf der seiner Anschlagfläche (21, 22) abgewandten Seite auf einem Stützvorsprung (23, 24) des Gehäuses (1) abgestützt ist.

9. Gummilager nach einem der Ansprüche 1 bis 8, **dadurch gekennzeichnet, dass** der Federkörper (4) zumindest eine erste Dichtung (25) zur Abdichtung gegenüber dem Planscherkolben (3) aufweist.

10. Gummilager nach einem der Ansprüche 1 bis 8, **dadurch gekennzeichnet, dass** der Federkörper (4) zumindest eine zweite Dichtung (26) zur Abdichtung gegenüber dem Gehäuse (1) aufweist.

11. Gummilager nach Anspruch 10, **dadurch gekennzeichnet, dass** die zweite Dichtung (26) zwischen dem Gehäuse (1) und dem Deckel (2) dichtend angeordnet ist.

12. Gummilager nach einem der Ansprüche 5 bis 7 in Kombination mit 10 und/oder 11, **dadurch gekennzeichnet, dass** der Federkörper (4), die Anschlagpuffer (16, 17), die erste Dichtung (25) und die zweite Dichtung (26) einstückig und materialeinheitlich ausgebildet sind.

## Claims

1. Hydraulically damping rubber mount, comprising a substantially tubular housing (1), which is closed in a sealing manner in each case at one end by a cover (2) and at the other end by a swash piston (3) and an annular spring body (4) of elastomeric material, the swash piston (3) comprising a substantially cylindrical shank (5) and a substantially cup-shaped head (6), the housing (1) enclosing the shank (5) with a radial spacing, the spring body (4) being arranged in the gap (7) formed by the spacing, and the head (6) being arranged movably, in the direction (8) of the vibrations introduced, in a working chamber (10) which is filled with damping fluid (9) and is bounded by the housing (1), the cover (2), the swash piston (3) and the spring body (4), **characterized in that** the shank (5) and the head (6) are formed in one piece and from one material and **in that** an annular inner sleeve (12) of plastically deformable material, by means of which the spring body (4) is connected to the shank (5), and/or the spring body (4) has an inside diameter (13, 15) which is produced such that it is smaller than the outside diameter (14) of the shank (5), in order to prestress the spring body (4) in the radial direction.

2. Rubber mount according to Claim 1, **characterized in that** the spring body (4) and the inner wall (11) of the housing (1) are adhesively connected.

3. Rubber mount according to either of Claims 1 and 2, **characterized in that** the inner sleeve (12) encloses the shank (5) in direct contact with it on the outer circumference.

4. Rubber mount according to one of Claims 1 to 3, **characterized in that** the spring body (4) and the inner sleeve (12) are adhesively connected.

5. Rubber mount according to one of Claims 1 to 4, **characterized in that** the spring body (4) is formed in a substantially H-shaped form, viewed in longitudinal section, and has in the direction (8) of the vibrations introduced at least one stop buffer (16, 17) on each of both sides.

6. Rubber mount according to Claim 5, **characterized in that** one of the stop buffers (16) is arranged in the working chamber (10) and can be brought into contact with the head (6) to limit extreme deflecting movements in the tensile direction (18) of the swash piston (3).

7. Rubber mount according to either of Claims 5 and 6, **characterized in that** one of the stop buffers (17) can be brought into contact with a stop plate (20), which is fixedly connected to the shank (5), to limit extreme deflecting movements in the compressive direction (19) of the swash piston (3).

8. Rubber mount according to one of Claims 5 to 7, **characterized in that** at least one of the stop buffers (16, 17) is supported on the side facing away from its stop surface (21, 22) on a supporting projection (23, 24) of the housing (1).

9. Rubber mount according to one of Claims 1 to 8, **characterized in that** the spring body (4) has at least one first seal (25) for sealing with respect to the swash piston (3).

10. Rubber mount according to one of Claims 1 to 8, **characterized in that** the spring body (4) has at least one second seal (26) for sealing with respect to the housing (1).

11. Rubber mount according to Claim 10, **characterized in that** the second seal (26) is arranged in a sealing manner between the housing (1) and the cover (2).

12. Rubber mount according to one of Claims 5 to 7 in combination with 10 and/or 11, **characterized in that** the spring body (4), the stop buffers (16, 17), the first seal (25) and the second seal (26) are formed in one piece and from one material.

## Revendications

1. Support en caoutchouc à amortissement hydraulique, comprenant un boîtier essentiellement tubulaire (1), qui est fermé dans chaque cas hermétiquement du côté frontal d'une part par un couvercle (2) et du côté frontal d'autre part par un piston de cisaillement plan (3) et un corps formant ressort annulaire (4) en matériau élastomère, le piston de cisaillement plan (3) comprenant une tige (5) de forme essentiellement cylindrique et une tête (6) substantiellement en forme de coupelle, le boîtier (1) entourant la tige (5) à distance radiale, le corps formant ressort (4) étant disposé dans la fente (7) formée par la distance et la tête (6) étant disposée dans la direction (8) des oscillations introduites, de manière mobile dans un espace de travail (10) rempli de liquide d'amortissement (9) limité par le boîtier (1), le couvercle (2), le piston de cisaillement plan (3) et le corps formant ressort (4), **caractérisé en ce que** la tige (5) et la tête (6) sont réalisées d'une seule pièce et venues de matière et **en ce qu'**une gaine intérieure (12) en matériau déformable plastiquement, au moyen de laquelle le corps formant ressort (4) est connecté à la tige (5), et/ou le corps formant ressort (4) présente(ent) un diamètre intérieur (13, 15) qui, du fait de la fabrication, est plus petit que le diamètre extérieur (14) de la tige (5), afin de précontraindre le corps formant ressort (4) dans la direction radiale.

2. Support en caoutchouc selon la revendication 1, **caractérisé en ce que** le corps formant ressort (4) et la paroi interne (11) du boîtier (1) sont connectés par adhésion.

3. Support en caoutchouc selon l'une quelconque des revendications 1 et 2, **caractérisé en ce que** la gaine intérieure (12) entoure la tige (5) du côté de la circonférence extérieure en s'appliquant directement contre elle.

4. Support en caoutchouc selon l'une quelconque des revendications 1 à 3, **caractérisé en ce que** le corps formant ressort (4) et la gaine intérieure (12) sont connectés par adhésion.

5. Support en caoutchouc selon l'une quelconque des revendications 1 à 4, **caractérisé en ce que** le corps formant ressort (4), considéré en coupe longitudinale, est réalisé essentiellement en forme de H et présente, dans la direction (8) des oscillations introduites, de part et d'autre à chaque fois au moins un tampon de butée (16, 17).

6. Support en caoutchouc selon la revendication 5, **caractérisé en ce que** l'un des tampons de butée (16) est disposé dans l'espace de travail (10) et peut être amené en contact avec la tête (6) pour limiter des mouvements de déviation extrêmes dans la direction de traction (18) du piston de cisaillement plan (3).

7. Support en caoutchouc selon l'une quelconque des revendications 5 ou 6, **caractérisé en ce que** l'un des tampons de butée (17) peut être amené en contact avec une plaque de butée (20) connectée fixement à la tige (5) pour limiter des mouvements de déviation extrêmes dans la direction de pression (19) du piston de cisaillement plan (3).

8. Support en caoutchouc selon l'une quelconque des revendications 5 à 7, **caractérisé en ce qu'**au moins l'un des tampons de butée (16, 17) est supporté sur le côté opposé à sa face de butée (21, 22) sur une projection d'appui (23, 24) du boîtier (1).

9. Support en caoutchouc selon l'une quelconque des revendications 1 à 8, **caractérisé en ce que** le corps formant ressort (4) présente au moins un premier joint d'étanchéité (25) pour réaliser l'étanchéité par rapport au piston de cisaillement plan (3).

10. Support en caoutchouc selon l'une quelconque des revendications 1 à 8, **caractérisé en ce que** le corps formant ressort (4) présente au moins un deuxième joint d'étanchéité (26) pour réaliser l'étanchéité par rapport au boîtier (1).

11. Support en caoutchouc selon la revendication 10, **caractérisé en ce que** le deuxième joint d'étanchéité (26) est disposé de manière hermétique entre le boîtier (1) et le couvercle (2).

12. Support en caoutchouc selon l'une quelconque des revendications 5 à 7 en combinaison avec les revendications 10 et/ou 11, **caractérisé en ce que** le corps formant ressort (4), les tampons de butée (16, 17), le premier joint d'étanchéité (25) et le deuxième joint d'étanchéité (26) sont réalisés d'une seule pièce et sont venus de matière.
